# EUROPÄISCHE PATENTANMELDUNG

(11) **EP 0 724 170 A2**
(43) Veröffentlichungstag der Anmeldung: **31.07.1996**
(21) Anmeldenummer: 96101031.1
(22) Anmeldetag: 25.01.1996
(51) Int. Cl.: G02B 6/136

(54) **Verfahren zur Herstellung von Mehrsegment-Rippenwellenleitern**

(30) Priorität: 28.01.1995 DE 19502684
(71) Anmelder: Alcatel SEL Aktiengesellschaft, D-70435 Stuttgart (DE); ALCATEL N.V., NL-2288 BH Rijswijk (NL)
(72) Erfinder: Kühn, Edgar, Dr., D-70563 Stuttgart (DE)
(74) Vertreter: Pechhold, Eberhard, Dipl.-Phys.

(57) **Zusammenfassung**

Es wird ein Verfahren zur Herstellung von Mehrsegment-Rippenwellenleitern angegeben, das selbstjustierend arbeitet und unnötige Maskierungs- und Ätzschritte vermeidet. Es werden im wesentlichen fünf Verfahrensschritte durchgeführt, in denen in einem Ausgangs-Schichtpaket, beiderseits von zu schaffenden Segmentübergangsbereichen (ST) die Deckschicht (DS) vor Aufbringen einer metallischen Kontaktschicht (KM) entfernt und, nach Ätzen einer gewünschten Rippenwellenleiterstruktur (R) und Abdecken der gesamten Fläche mit Ausnahme der Segmentübergangsbereiche, die Kontaktschicht (KM) in den Segmentübergangsbereichen durch einen Lift-off-Schritt beseitigt und so die elektrische Trennung der einzelnen Segmente erreicht wird.

## Beschreibung

Die Erfindung betrifft ein Verfahren gemäß dem Oberbegriff des Patentanspruchs 1.

Mit einem solchen Verfahren können segmentierte optische Wellenleiter hergestellt werden, deren Segmente über getrennte metallische Kontakte elektrisch gesteuert oder auf ihren Zustand hin abgefragt werden können.

Die Segmente solcher optischer Wellenleiter können, z.B. in der optischen Nachrichtentechnik, als Laser, optische Verstärker, optische Modulatoren, Absorber, Wellenlängenumsetzer oder als passive, Licht unverstärkt weiterleitende Bauelemente betrieben und genutzt werden.

Da die Abmessungen derartiger Bauelemente sehr klein sind, ist bei ihrer Herstellung äußerste Präzision gefordert. Die Einhaltung von Toleranzen im µm Bereich ist dabei derart aufwendig, daß die Justage verändernde Prozeßschritte wie z.B. weitere Justage- oder Maskierungsschritte oder Ändern des Bearbeitungswerkzeuges während des Herstellungsverfahrens nicht in Kauf genommen werden können, ohne die Herstellungskosten kommerziell unvertretbar ansteigen zu lassen. Es ist deshalb unerläßlich, ein Verfahren zu finden, bei dem keine Umsetzungen oder Veränderungen der Werkzeuggeometrie während des Herstellungsverfahrens erforderlich sind und möglichst viele Prozeßschritte selbstjustierend ausgeführt werden können. Dies ist die Aufgabe der Erfindung. Sie wird durch das in Patentanspruch 1 angegebene Verfahren gelöst.

Mit dem Verfahren nach der Erfindung können lateral sehr kleine Strukturen (im µm Bereich) erzeugt werden, ohne einen besonderen Ätzschritt zur Auftrennung der Metallisierung zwischen benachbarten Segmenten vornehmen zu müssen. Es wird hierzu vielmehr, wie auch zum Ätzen des Rippenwellenleiters, ein selbstjustierender Prozeßschritt (Lift off-Technik) ausgeführt. Es entfallen hierdurch Maskierungsschritte, die hohe Justiergenauigkeit und deshalb einen hohen Aufwand erfordern würden.

Eine Ausgestaltung des Verfahrens nach der Erfindung ist im Patentanspruch 2 angegeben.

Anhand von 5 Figuren soll nun das Verfahren nach der Erfindung ausführlich beschrieben werden:
- Fig. 1: zeigt eine Halbleiter-Schichtenfolge auf einem Substrat,
- Fig. 2-5: zeigen die Schichtenfolge, bzw. den entstehenden optischen Wellenleiter nach dem 1., 2., 3. und letzten Verfahrensschritt.

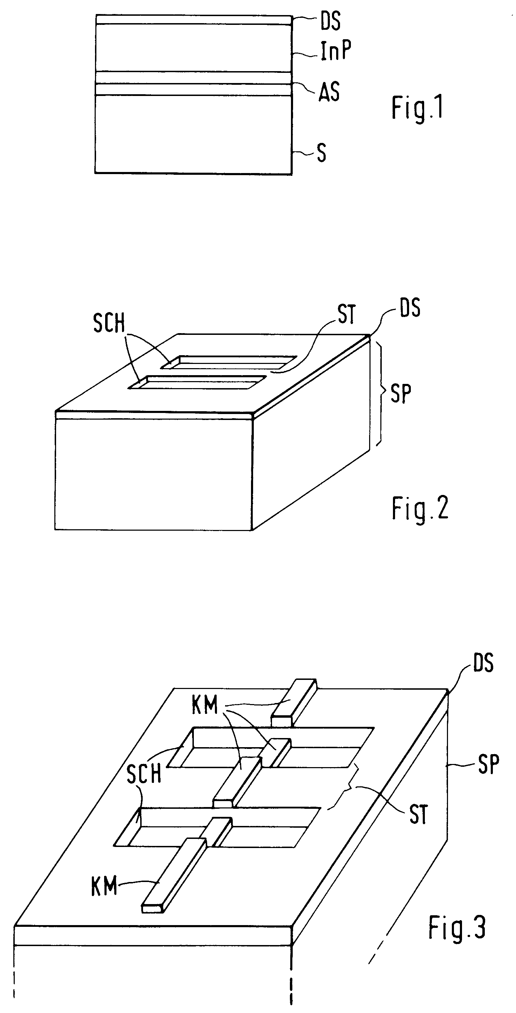

In Fig. 1 ist eine bekannte Halbleiter-Schichtenfolge dargestellt, die als Ausgangsprodukt für die Herstellung aktiver und passiver optischer Wellenleiter dienen kann. Auf ein Substrat S, z.B. eine In P-Schicht, sind weitere Halbleiterschichten aufgewachsen, darunter ein Schichtpaket AS, das z.B. eine aktive Schicht enthält, darüber eine weitere In P-Schicht InP und schließlich eine nur etwa 0,3 µm dicke Deckschicht DS, die z.B. aus hochdotiertem In Ga As bestehen kann und die naßchemisch ätzbar ist.

Soll auf einem die in Fig. 1 dargestellte Schichtenfolge enthaltenden Halbleiterchip ein segmentierter optischer Rippenwellenleiter entstehen, bei dem die einzelnen Segmente voneinander getrennte metallische Kontakte erhalten sollen, so wird beiderseits von Segmentübergangsbereichen die Deckschicht entfernt. Dies kann z.B. mittels Trockenätzen geschehen.

Fig. 2 zeigt ein Halbleiterchip - der Einfachheit halber nur als Schichtpaket SP mit der aufliegenden Deckschicht DS dargestellt -, dessen Deckschicht zwei Schlitze, Sch, beiderseits von einem späteren Segmentübergangsbereich ST aufweist.

Dasselbe Halbleiterchip mit einer aufgebrachten Kontakt-Metallisierung KM zeigt Fig. 3. Hier wurde auf der Chipoberfläche ein nur wenige µ breiter Metallstreifen erzeugt, ohne daß dabei auf die in der Deckschicht vorhandenen Schlitze Rücksicht genommen wurde. In der Figur ist deutlich zu sehen, daß im Bereich der Wandungen der Schlitze die Metallisierung jeweils unterbrochen oder zumindest in ihrer Dicke deutlich reduziert ist.

Die Herstellung der Kontakt-Metallisierung kann auf eine beliebige bekannte Art und Weise geschehen, beispielsweise durch Aufbringen einer Fotolackschicht, die durch eine Schattenmaske, die den Bereich der Kontakt-Metallisierung abdeckt, belichtet, anschließend entwickelt, mit Metall bedampft und schließlich wieder abgelöst wird, wobei das direkt auf der Deckschicht aufliegende Metall im Bereich des durch die Schattenmaske abgedeckten Streifens nicht mit entfernt wird.

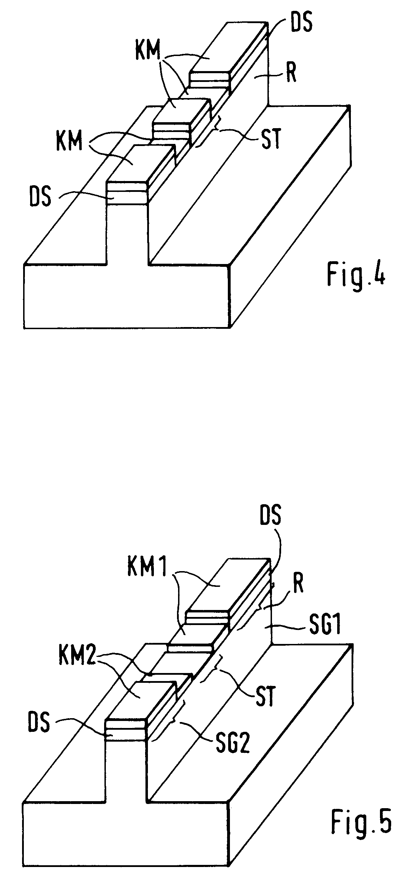

Fig. 4 zeigt den Halbleiterchip nach Herausätzen einer Rippenstruktur R unterhalb der Kontakt-Metallisierung mit Hilfe eines trockenchemischen Ätzverfahrens wie z.B. RIE, IBE oder RIBE. Die Metallauflage kann bei derartigen Verfahren als Maske dienen. Ein besonderer Maskierungsschritt wird somit eingespart.

In Fig. 5 ist der Halbleiterchip mit elektrisch voneinander getrennten metallischen Kontakten KM1, KM2 wiedergegeben. Durch die voneinander getrennten Kontakte wird der Rippenwellenleiter R in zwei einzeln ansteuerbare Segmente SG1, SG2 unterteilt. Der Bereich des Segmentüberganges enthält keine Metallisierung mehr. Dies wurde in zwei Schritten erreicht: Zunächst wurde der gesamte Chip bis auf den Bereich des Segmentüberganges auf dieselbe Art und Weise wie im Zusammenhang mit Fig. 3 beschrieben, der Bereich der Kontakt-Metallisierung, mit Fotolack abgedeckt. Dann wurde die im Bereich des Segmentüberganges noch vorhandene Deckschicht naßchemisch weggeätzt. Durch Unterätzen der im Bereich des Segmentüberganges befindlichen Metallisierung wurde diese entfernt.

## Patentansprüche

1. Verfahren zur Herstellung von mehrfach segmentierten optischen Rippenwellenleiterstrukturen (R) mit den einzelnen Wellenleitersegmenten (SG1, SG2) zugeordneten, elektrisch voneinander getrennten metallischen Kontakten (KM1, KM2) aus einer auf einem Substrat (S) aufgewachsenen Halbleiter-Schichtenfolge, deren oberste, die metallischen Kontakte tragende Deckschicht (DS) naßchemisch ätzbar ist,
**dadurch gekennzeichnet,**
daß nach Herstellen der Halbleiter-Schichtenfolge einschließlich der Deckschicht (DS) folgende Verfahrensschritte nacheinander ausgeführt werden:
- Entfernen der Deckschicht in schmalen Flächenbereichen (SCH) beiderseits von Segmentübergangsbereichen (ST), in denen später eine elektrische Trennung zwischen metallischen Kontakten aneinandergrenzender Wellenleitersegmente (SG1, SG2) bestehen soll,
- Aufbringen einer Metallschicht (KM) im Bereich von zu schaffenden Wellenleiterstrukturen (R) ohne Rücksicht auf Segmentgrenzen und Segmentübergangsbereiche (ST),
- Herausätzen von Wellenleiter bildenden Rippenstrukturen (R) aus der Halbleiter-Schichtenfolge unter Benutzung der Metallschicht als Ätzmaske,
- Abdecken der gesamten strukturierten Halbleiter-Schichtenfolge mit Ausnahme von Segmentübergangsbereichen mit einer gegen Ätzmittel, die zum Ätzen der Deckschicht verwendet werden, resistiven Schicht,
- Ätzen der Deckschicht (DS) in Segmentübergangsbereichen und damit Unterätzen und Entfernen der Metallschicht in diesen Bereichen.

2. Verfahren nach Anspruch 1,
dadurch gekennzeichnet, daß zum Aufbringen einer Metallschicht im Bereich der Wellenleiterstrukturen z.B. folgende Prozeßschritte ausgeführt werden:
Aufbringen einer Fotolackschicht, ganzflächiges Belichten und, nach einem Temperaturschritt, nochmaliges Belichten dieser Fotolackschicht durch eine die Wellenleiterstruktur abbildende Schattenmaske,
Entwickeln der Fotolackschicht und dabei Ablösen der Schicht im belichteten Bereich der Wellenleiterstruktur,
Metallisieren der Halbleiter-Schichtenfolge durch Bedampfen, Ablösen der noch vorhandenen Teile der Fotolackschicht mitsamt aufgedampften Metallanteilen.
